# EUROPÄISCHE PATENTSCHRIFT

(11) **EP 3 063 857 B1**
(45) Veröffentlichungstag und Bekanntmachung des Hinweises auf die Patenterteilung: **27.04.2022**
(21) Anmeldenummer: 15710753.3
(22) Anmeldetag: 12.03.2015
(51) Int. Cl.: H02K 9/22

(54) **KÜHLUNG EINES AKTIVTEILS EINER ELEKTRISCHEN MASCHINE**
COOLING OF AN ACTIVE PART OF AN ELECTRIC MACHINE
REFROIDISSEMENT D'UNE PIÈCE ACTIVE D'UNE MACHINE ÉLECTRIQUE

(30) Priorität: 21.03.2014 EP 14161080
(43) Veröffentlichungstag der Anmeldung: 07.09.2016
(73) Patentinhaber: Siemens Aktiengesellschaft, 80333 München (DE)
(72) Erfinder: FESTA, Marco, 14612 Falkensee (DE); CENTNER, Matthias, 10555 Berlin (DE); SABELFELD, Ilja, 10119 Berlin (DE)
(86) Internationale Anmeldenummer: PCT/EP2015/055208
(87) Internationale Veröffentlichungsnummer: WO 2015/140048

(56) Entgegenhaltungen:
- EP-A1- 0 632 566
- EP-A2- 1 276 205
- DE-A1-102008 044 168

## Beschreibung

Die Erfindung betrifft ein Aktivteil einer elektrischen Maschine, wobei das Aktivteil Folgendes umfasst: zumindest zwei Zähne, welche jeweils ein magnetisch permeables Material aufweisen, und welche jeweils in radialer Richtung aus einer Manteloberfläche des Aktivteils herausragen, und zumindest eine Wicklungsnut, welche jeweils zwischen einem Paar der zumindest zwei Zähne angeordnet ist, wobei die zumindest eine Wicklungsnut im Wesentlichen entlang einer Rotationsachse des Aktivteils angeordnet ist und wobei eine elektrische Wicklung in der jeweiligen Wicklungsnut ist, wobei zumindest eine erste offene Aussparung, welche jeweils an einem jeweiligen Zahn in einer jeweiligen Ebene angeordnet ist, vorgesehen ist, wobei die jeweilige Ebene durch eine im Wesentlichen radiale Richtung und eine Richtung im Wesentlichen entlang der Rotationsachse aufgespannt wird, wobei zumindest ein Wärmeleitelement vorgesehen ist, welches ein wärmeleitendes Material aufweist, dessen Wärmeleitfähigkeit größer als jene des magnetisch permeablen Materials ist.

Weiterhin betrifft die Erfindung eine elektrische Maschine mit einem derartigen Aktivteil.

Ein derartiges Aktivteil ist beispielsweise als Läufer einer großen elektrischen Maschine ausgeführt. Die Kühlung eines derartigen Läufers erfordert in der Regel aufwändige Kühlsysteme mit Strömungspfaden in der Nähe der Wärmequellen. Insbesondere bei Vollpolmaschinen, deren Läufereisen massiv ausgeführt ist, wie beispielsweise bei Turbomaschinen, bestehen technische und technologische Grenzen bei der Gestaltung von Kühlkanälen. Aus diesen Gründen ist sowohl die Kühloberfläche, als auch die Querschnittsfläche für die Kühlströmungen begrenzt. Das Verhältnis von kühltechnischem Nutzen und technischem Aufwand ist gering einzuschätzen, was sich wiederum in hohen Herstellungskosten äußert.

Eine Kühlung ausschließlich über die Läuferoberfläche wäre zwar mit deutlich geringerem Herstellungsaufwand verbunden, jedoch gelingt es dann bei Großmaschinen nicht, die Läuferwicklung ausreichend zu kühlen. Ein maßgeblicher Anteil an der gesamten Temperaturdifferenz zwischen der Läuferwicklung und dem Kühlmedium geht auf die langen Kühlwege durch die Läuferzähne zurück. Die verwendbaren Materialien für das Läufereisen werden durch mechanische und magnetische Anforderungen festgelegt.

Das Problem besteht unter anderem also darin, dass die bisherigen Lösungen entweder kostenintensiv oder ungenügend effektiv sind.

Eine kostengünstige Kühlung des Läufers über dessen Mantelfläche ist bisher nur bei kleinen Turboläufern unterhalb von 5 Megawatt Wellenleistung einsetzbar. Allerdings sind dann die Läuferverluste sehr zu begrenzen, d.h. nur geringe Werte der Erregerstromdichte sind möglich. Somit haben derartig gekühlte Läufer einen großen Durchmesser oder sind besonders lang. Die Temperaturdifferenzen über anderen Abschnitten, z.B. über der Wicklungsisolierung und von der Oberfläche zum Luftspalt, müssen durch geeignete Gestaltung so gering wie möglich gehalten werden.

Üblicher ist eine direkte Läuferbelüftung über Kühlkanäle, die längs der Maschinenachse verlaufen und Öffnungen zu den Wicklungselementen und zum Luftspalt haben. Gewöhnlich muss sich über die Wicklung in den Nuten eine Kühloberfläche ausbilden, was einen erheblichen Aufwand bei der Herstellung der Spulen erfordert.

Nur bei Maschinen, deren Eisen im Läufer geblecht ausgeführt werden, werden Teilblechpakete mit jeweils dazwischen liegenden Ventilationsschlitzen gebildet. Dadurch wird eine sehr große Kühloberfläche gebildet, und die Strecken zwischen den Wärmequellen und der Kühloberfläche sind besonders kurz. Bei massiv ausgeführten Rotoren wird diese Kühlvariante wegen mechanischer und technologischer Randbedingungen nicht angewendet.

Die EP 1276205 A2 offenbart die Merkmale des Oberbegriffs nach Anspruch 1.

Der Erfindung liegt die Aufgabe zugrunde, die Kühlung eines Aktivteils auf kostengünstige Art und Weise zu verbessern.

Diese Aufgabe wird durch ein Aktivteil gemäß Anspruch 1 und gemäß einer elektrischen Maschine nach Anspruch 13 gelöst.

Ein derart ausgestaltetes Aktivteil erlaubt, die effektive Wärmeleitfähigkeit der Zähne des Aktivteils deutlich zu verbessern, indem Elemente aus einem hochwärmeleitfähigen Material im Bereich der Nutseiten untergebracht werden. Diese Elemente dienen der Wärmeleitung in Richtung der Manteloberfläche des Aktivteils und insbesondere einem Temperaturausgleich entlang der Rotationsachse.

Insbesondere werden bei dem vorgeschlagenen Aktivteil die beiden Hauptfunktionen des Aktivteils, nämlich zum einen die Leitung des magnetischen Flusses und zum anderen die Leitung des Wärmestroms, auf zwei getrennte Bauteile im Nutbereich bzw. Zahnbereich aufgeteilt.

Die technische Umsetzung des derartigen Aktivteils trägt insbesondere bei oberflächenbelüfteten Aktivteilen maßgeblich zur Reduzierung der Temperatur der in der jeweiligen Nut befindlichen elektrischen Wicklung bei, sodass die entsprechenden elektrischen Maschinen mit höherer Drehmomentdichte ausgeführt werden können. Dabei ist das vorgeschlagene Aktivteil deutlich einfacher aufgebaut als die konventionelle Ausführung mit zusätzlichen Strömungspfaden, so dass eine zuverlässige und gleichzeitig kostengünstige Kühlung des jeweiligen Aktivteils erreicht wird. Beispielsweise wird der Einsatz einfach aufgebauter Erregerspulen ermöglicht, da keine Oberfläche für einen konvektiven Wärmeübergang innerhalb des Aktivteils entstehen muss.

Vorzugsweise ist das Aktivteil bzw. die elektrische Maschine derart ausgestaltet, dass ein Betrieb bei Drehzahlen größer als 4000 U/min, insbesondere größer als 10.000 U/min, und Leistungen größer als 1 MW, insbesondere größer als 10 MW, ermöglicht wird. Vorzugsweise wird die elektrische Maschine als Synchronmaschine und/oder Vollpolläufermaschine, insbesondere Turbomaschine, ausgestaltet. Denkbar ist weiterhin, dass der jeweilige Zahn als jeweiliger Pol der elektrischen Maschine ausgeführt wird, wobei die elektrische Maschine hierbei insbesondere als Schenkelpolmaschine ausgeführt wird.

Es weist also der jeweilige Zahn in Umfangsrichtung betrachtet eine jeweilige Zahnflanke auf, welche der jeweiligen Wicklungsnut zugewandt ist, wobei eine jeweilige erste offene Aussparung zumindest abschnittsweise an der jeweiligen Zahnflanke angeordnet ist.

Die jeweilige erste offene Aussparung kann beispielsweise an der jeweiligen Zahnflanke vom Zahn ausgefräst werden. In der jeweiligen ersten offenen Aussparung wird das zuvor erläuterte Wärmeleitelement angeordnet. Diese Anordnung erlaubt einen besonders wirkungsvollen Abtransport der während des Betriebs der elektrischen Maschine entstehenden Abwärme, da ein Großteil der Abwärme in der elektrischen Wicklung erzeugt wird, welche zumindest teilweise an das jeweilige Wärmeleitelement in der jeweiligen ersten offenen Aussparung angrenzt.

Insbesondere kann sich die jeweilige erste offene Aussparung bzw. das jeweilige Wärmeleitelement in axialer Richtung entlang des jeweiligen kompletten Zahnes, insbesondere entlang zumindest der Hälfte oder eines Teils des jeweiligen Zahnes, erstrecken. Da der Bereich der axialen Mitte üblicherweise zu den heißesten Stellen des im Betrieb befindlichen Aktivteils gehört, hat eine vergleichsweise große axiale Ausdehnung der jeweiligen ersten offenen Aussparung bzw. des jeweiligen Wärmeleitelementes den zusätzlichen Vorteil, dass Wärme von der axialen Mitte wirkungsvoll zu kühleren Stellen, insbesondere zu den axialen Stirnseiten, des Aktivteils abtransportiert werden kann. Eine vergleichsweise große axiale Ausdehnung liegt beispielsweise vor, wenn sich die jeweilige erste offene Aussparung bzw. das jeweilige Wärmeleitelement über zumindest die Hälfte der axialen Erstreckung des Aktivteils erstrecken. Entsprechend sind die jeweilige erste offene Aussparung vorzugsweise als Nut und das jeweilige Wärmeleitelement vorzugsweise quaderförmig, insbesondere als Platte, ausgestaltet.

Vorzugsweise weist die jeweilige erste offene Aussparung eine sich in Umfangsrichtung zur Wicklungsnut hin verjüngende Ausdehnung in radialer Richtung auf, so dass das jeweilige Wärmeleitelement durch einen Formschluss an einem Herausfallen aus der jeweiligen ersten offenen Aussparung gehindert wird.

Erfindungsgemäß weist die in der jeweiligen Wicklungsnut befindliche elektrische Wicklung dabei eine Oberfläche auf, welche einer radialen Öffnung der jeweiligen Wicklungsnut zugewandt ist, wobei das zumindest eine Wärmeleitelement derart ausgestaltet ist, dass das zumindest eine Wärmeleitelement sich zumindest abschnittsweise in radialer Richtung an die jeweilige, der radialen Öffnung zugewandte Oberfläche der jeweiligen elektrischen Wicklung anschließend angeordnet ist.

Somit deckt das jeweilige Wärmeleitelement die in der jeweiligen Wicklungsnut befindliche elektrische Wicklung in Richtung zur offenen Seite der Wicklungsnut zumindest teilweise ab. Für das Beispiel von Zähnen, welche nach radial außen weisen, deckt zumindest ein Teil des jeweiligen Wärmeleitelementes die radial äußere Oberfläche der jeweiligen elektrischen Wicklung zumindest teilweise ab.

Durch ein derart ausgestaltetes Wärmeleitelement wird erreicht, dass die Abwärme im Inneren des Aktivteils in radialer Richtung zur Manteloberfläche des Aktivteils abtransportiert wird.

Bei einer weiteren vorteilhaften Ausgestaltung der Erfindung ist die jeweilige Wicklungsnut in radialer Richtung dabei durch einen jeweiligen Nutverschlusskeil verschließbar, mittels welchem die in der jeweiligen Wicklungsnut befindliche elektrische Wicklung radial fixierbar ist, wobei die jeweilige erste offene Aussparung und das jeweilige Wärmeleitelement an einer dem jeweiligen Nutverschlusskeil zugewandten Seite des jeweiligen Zahnes angeordnet ist.

Die jeweilige erste offene Aussparung und/oder das jeweilige Wärmeleitelement erstreckt sich in radialer Richtung somit weiter zur Manteloberfläche als die jeweilige elektrische Wicklung, so dass sich auch das in der jeweiligen ersten offenen Aussparung angeordnete Wärmeleitelementes weiter zur Manteloberfläche erstreckt als jeweilige elektrische Wicklung. Diese Ausgestaltung erlaubt einen besonders wirkungsvollen Abtransport von Abwärme aus der jeweiligen elektrischen Wicklung. Eine derartige radiale Erstreckung der jeweiligen ersten offenen Aussparung und/oder des jeweiligen Wärmeleitelementes ist dabei auch ohne einen jeweiligen Nutverschlusskeil denkbar.

Bei einer weiteren vorteilhaften Ausgestaltung der Erfindung ist eine jeweilige zweite offene Aussparung als eine Nut oder eine Bohrung ausgeführt, welche in radialer Richtung in den jeweiligen Zahn eingebracht ist, wobei in der Nut oder der Bohrung ein Wärmeleitelement angeordnet ist, welches ein wärmeleitendes Material aufweist, dessen Wärmeleitfähigkeit größer als jene des magnetisch permeablen Materials ist.

In der jeweiligen zweiten Aussparung wird das zuvor erläuterte Wärmeleitelement angeordnet. Diese Anordnung erlaubt einen besonders wirkungsvollen Abtransport der während des Betriebs der elektrischen Maschine entstehenden Abwärme in radialer Richtung. Dies ist insbesondere bei elektrischen Maschinen von Vorteil, bei deren Betrieb auch im Zahn nicht zu vernachlässigende Verluste entstehen, die sich in Form einer teilweise beträchtlichen Erwärmung des jeweiligen Zahnes bemerkbar machen. Vorzugsweise ist die jeweilige zweite offene Aussparung in Umfangsrichtung im Bereich der Mitte des jeweiligen Zahnes angeordnet. Die als Nut ausgeführte jeweilige zweite offene Aussparung kann beispielsweise aus dem jeweiligen Zahn heraus gefräst werden.

Vorzugsweise weist das jeweilige Wärmeleitelement bzw. die jeweilige zweite offene Aussparung entlang des radialen Bereiches, in welchem das jeweilige Wärmeleitelement angeordnet ist, nach radial außen eine zunehmende Ausdehnung in Umfangsrichtung auf.

Für einen zusätzlich gesteigerten Abtransport von Abwärme aus dem Inneren des Aktivteils ist insbesondere eine Kombination zumindest einer der weiter oben erläuterten ersten offenen Aussparungen mit zumindest einer der erläuterten zweiten offenen Aussparungen machbar.

Bei einer weiteren vorteilhaften Ausgestaltung der Erfindung weist das Aktivteil dabei zumindest einen Verschlussstopfen auf, mittels welchem die jeweilige zweite offene Aussparung verschließbar ist.

Mittels des zumindest einen Verschlussstopfens ist das jeweilige in der jeweiligen zweiten offenen Aussparung angeordnete Wärmeleitelement zuverlässig in radialer Richtung fixierbar. Insbesondere kann als Material für den jeweiligen Verschlussstopfen ein guter Wärmeleiter verwendet werden. Denkbar ist dabei auch, dass auch der jeweilige Verschlussstopfen das wärmeleitende Material aufweist.

Vorzugsweise weist die jeweilige zweite offene Aussparung zumindest im radialen Bereich des jeweiligen Verschlussstopfens eine sich in radialer Richtung zur Manteloberfläche hin verjüngende Ausdehnung in Umfangsrichtung auf, so dass der jeweilige Verschlussstopfen durch einen Formschluss an einem Herausfallen aus der jeweiligen zweiten offenen Aussparung gehindert wird. Insbesondere kann die jeweilige zweite offene Aussparung vor ihrer Verjüngung noch eine Aufweitung ihrer Ausdehnung in Umfangsrichtung aufweisen.

Bei einer weiteren vorteilhaften Ausgestaltung der Erfindung ist das Aktivteil als massiver Läufer der elektrischen Maschine ausgeführt.

Insbesondere ist der Läufer bzw. die elektrische Maschine derart ausgestaltet, dass ein Betrieb bei Drehzahlen größer als 4000 U/min, insbesondere größer als 10.000 U/min, und Leistungen größer als 1 MW, insbesondere größer als 10 MW, ermöglicht wird.

Besonders bei massiven Läufern ist die Möglichkeit, mittels Kühlkanälen zu kühlen, stark eingeschränkt. Mittels der jeweiligen offenen Aussparung und dem jeweiligen darin angeordneten Wärmeleitelement wird dennoch eine wirkungsvolle und gleichermaßen kostengünstige Kühlung derartiger Läufer ermöglicht.

Bei einer weiteren vorteilhaften Ausgestaltung der Erfindung ragen die zumindest zwei Zähne jeweils nach radial außen aus der Manteloberfläche heraus, wobei der jeweilige Zahn zumindest entlang der elektrischen Wicklung eine von radial innen nach radial außen zunehmende Ausdehnung in Umfangsrichtung aufweist.

Der jeweilige Zahn wird insbesondere derart ausgeführt, dass er in einem Schnitt senkrecht zur Rotationsachse einen trapezförmigen Querschnitt aufweist und seine Ausdehnung in Umfangsrichtung nach radial außen hin zunimmt. Folglich nimmt auch die für den magnetischen Fluss maßgebliche Zahnbreite in Umfangsrichtung nach radial außen zu.

Betrachtet man lediglich die magnetischen Eigenschaften des jeweiligen Zahns, ist die nach radial außen zunehmende Zahnbreite nicht notwendig, so dass sich die Möglichkeit bietet, örtlich das magnetisch permeable Material des jeweiligen Zahnes abzutragen und stattdessen die Wärmeleitelemente aus hochwärmeleitfähigem Material einzufügen. Das erwähnte, örtliche Abtragen wird durch die zuvor erläuterte offene Aussparung bzw. erste und/oder zweite offene Aussparung verwirklicht, in welcher jeweils das zuvor erläuterte Wärmeleitelement angeordnet ist.

Beispielsweise sind zwei benachbarte Zähne dabei derart ausgestaltet, dass die jeweilige zwischen den beiden benachbarten Zähnen befindliche Wicklungsnut parallelflankig ausgestaltet ist, so dass sich die Ausdehnung in Umfangsrichtung der jeweiligen Wicklungsnut von radial innen nach radial außen nicht ändert.

Vorzugsweise ist der jeweilige Zahn derart ausgestaltet, dass die insgesamt verbleibende Breite in Umfangsrichtung des magnetisch permeablen Materials in radialer Richtung zumindest abschnittsweise, insbesondere entlang zumindest der Hälfte oder ¾ der radialen Erstreckung der jeweiligen elektrischen Wicklung, konstant bleibt. Dies kann beispielsweise auch dadurch erreicht werden, dass die Ausdehnung in Umfangsrichtung der jeweiligen Aussparung nach radial außen hin zunimmt.

Bei einer weiteren vorteilhaften Ausgestaltung der Erfindung ragen die zumindest zwei Zähne jeweils ausgehend von einer jeweiligen Zahnwurzel auf einer Länge einer Zahnhöhe bis zu einer jeweiligen Zahnspitze radial aus der Manteloberfläche heraus, wobei sich die jeweilige offene Aussparung und das jeweilige Wärmeleitelement in radialer Richtung zur jeweiligen Zahnwurzel hin jeweils bis zu einer Tiefe in den jeweiligen Zahn erstreckt, welche höchstens 9/10, insbesondere höchstens 4/5, der Zahnhöhe entspricht.

Die Tiefe bemisst sich dabei in radialer Richtung ausgehend von der jeweiligen Zahnspitze in Richtung zur jeweiligen Zahnwurzel. Eine derart ausgestaltete jeweilige offene Aussparung bzw. ein derart ausgestaltetes jeweiliges Wärmeleit-element stellt einen guten Kompromiss zwischen zufriedenstellenden magnetischen Eigenschaften und einem ausreichenden Wärmeabtransport bezüglich des jeweiligen Zahnes dar. Denn für eine gute Wärmeabfuhr ist es nicht unbedingt erforderlich, die jeweilige offene Aussparung bzw. das jeweilige Wärmeleitelement in radialer Richtung bis zur Zahnwurzel in den jeweiligen Zahn einzubringen. Somit werden die magnetischen Eigenschaften des jeweiligen Zahnes an der Zahnwurzel nicht bzw. unwesentlich durch die jeweilige offene Aussparung bzw. das jeweilige Wärmeleitelement gestört, was große Vorteile bietet, da die Führung bzw. die Dichte der Magnetfeldlinien an der Zahnwurzel entscheidend für den Wirkungsgrad und weitere wichtige Eigenschaften der elektrischen Maschine sein können. Zusätzlich hat eine derart ausgestaltete jeweilige offene Aussparung Vorteile für die mechanische Stabilität des jeweiligen Zahnes.

Vorzugsweise weisen die jeweilige offene Aussparung und das jeweilige Wärmeleitelement dabei in etwa die gleiche radiale Ausdehnung zur jeweiligen Zahnwurzel hin auf.

Für das Beispiel von nach radial außen aus der Manteloberfläche herausragende Zähne kann durch eine jeweilige, derart ausgestaltete offene Aussparung bzw. ein jeweiliges, derart ausgestaltetes Wärmeleitelement erreicht werden, dass jene Zahnbreite, welche der jeweilige Zahn in Umfangsrichtung im Bereich der Zahnwurzel aufweist, nach radial außen nicht unterschritten wird.

Bei einer weiteren vorteilhaften Ausgestaltung der Erfindung ragen die zumindest zwei Zähne jeweils ausgehend von einer jeweiligen Zahnwurzel auf einer Länge einer Zahnhöhe bis zu einer jeweiligen Zahnspitze radial aus der Manteloberfläche heraus, wobei sich die jeweilige offene Aussparung und das jeweilige Wärmeleitelement in radialer Richtung zur jeweiligen Zahnspitze hin jeweils zumindest bis zu jener Oberfläche der in der jeweiligen Wicklungsnut befindlichen elektrischen Wicklung erstreckt, welche einer radialen Öffnung der jeweiligen Wicklungsnut zugewandt ist.

Eine derartige radiale Erstreckung der jeweiligen offenen Aussparung, insbesondere der jeweiligen ersten offenen Aussparung, bzw. des jeweiligen Wärmeleitelementes erlaubt einen guten Abtransport der insbesondere von der elektrischen Wicklung aufgenommenen Wärme zur Manteloberfläche hin. Während die jeweilige zweite offene Aussparung in radialer Richtung zur Manteloberfläche offen ausgeführt ist, bewirkt eine derartige radiale Erstreckung des jeweiligen, in der jeweiligen zweiten offenen Aussparung angeordneten Wärmeleitelementes einen guten Abtransport der Wärme aus dem Inneren des jeweiligen Zahnes.

Die jeweilige erste offene Aussparung und das jeweilige Wärmeleitelement können beispielsweise in etwa die gleiche radiale Ausdehnung zur jeweiligen Zahnspitze hin aufweisen. Insbesondere wenn die jeweilige offene Aussparung als die oben erläuterte erste offene Aussparung ausgeführt ist, erstrecken sich die jeweilige erste offene Aussparung und das jeweilige Wärmeleitelement in radialer Richtung vorzugsweise entlang zumindest eines Abschnittes der oben erläuterten Seite des jeweiligen Zahnes, die dem jeweiligen Nutverschlusskeil zugewandt ist. Alternativ oder zusätzlich kann die jeweilige erste offene Aussparung derart ausgestaltet sein, dass sie zumindest abschnittsweise die jeweilige elektrische Wicklung an ihrer der radialen Öffnung der jeweiligen Wicklungsnut zugewandten Oberfläche abdeckt.

Bei einer weiteren vorteilhaften Ausgestaltung der Erfindung umfasst das wärmeleitende Material Kupfer oder Aluminium.

Kupfer hat den Vorteil, dass es ohnehin bei der Herstellung elektrischer Maschinen verwendet wird und zusätzlich eine gute Wärmeleitfähigkeit aufweist. Darüber hinaus sind Kupfer und Aluminium leicht zu bearbeiten, so dass die Herstellung eines guten thermischen Kontaktes zwischen dem jeweiligen Wärmeleitelement einerseits und dem magnetisch permeablen Material und/oder der elektrischen Wicklung andererseits ohne großen Aufwand machbar ist.

Bei einer weiteren vorteilhaften Ausgestaltung der Erfindung ist das jeweilige Wärmeleitelement formschlüssig oder stoffschlüssig mit dem jeweiligen Zahn verbunden.

Der Formschluss kann beispielsweise dadurch erreicht werden, dass sich die jeweilige offene Aussparung zu ihrer jeweiligen Öffnung hin verjüngt und das jeweilige Wärmeleitelement beispielsweise in radialer Richtung bzw. in Umfangsrichtung eingepresst wird oder in axialer Richtung in die jeweilige offene Aussparung eingeschoben wird. Denkbar ist insbesondere bei der oben erläuterten jeweiligen zweiten offenen Aussparung einen Verschlussstopfen vorzusehen, mittels welchem der Formschluss und eine radiale Fixierung des jeweiligen Wärmeleit-elementes zur Manteloberfläche hin erreicht wird. Eine stoffschlüssige Verbindung kann beispielsweise mittels heißisostatischem Pressen (HIP) erreicht werden. Durch die formschlüssige bzw. stoffschlüssige Verbindung wird jeweils ein guter Wärmeübergang zu dem jeweiligen Wärmeleitelement gewährleistet.

Bei einer weiteren vorteilhaften Ausgestaltung der Erfindung ist das jeweilige Wärmeleitelement mittels eines Klebers mit dem jeweiligen Zahn verbunden.

Durch den Kleber wird eine beinahe beliebige geometrische Form des jeweiligen Wärmeleitelementes bzw. der jeweiligen offenen Aussparung ermöglicht, wobei das jeweilige Wärmeleit-element dennoch zuverlässig am bzw. im Zahn gehalten wird. Vorzugsweise weist der Kleber eine vergleichsweise hohe Wärmeleitfähigkeit auf, so dass ein guter Wärmeübergang zu dem jeweiligen Wärmeleitelement gewährleistet wird. Beispielsweise kann der Kleber als eine Art klebende Wärmeleitpaste ausgeführt sein.

Bei einer weiteren vorteilhaften Ausgestaltung der Erfindung ist die Wärmeleitfähigkeit des wärmeleitenden Materials zumindest fünfmal so groß, vorzugsweise zumindest achtmal so groß, wie die Wärmeleitfähigkeit des magnetisch permeablen Materials.

Derartige Materialien stellen einen besonders wirkungsvollen Abtransport der während des Betriebs des jeweiligen Aktivteils entstehenden Abwärme sicher. Insbesondere wenn das Aktivteil massiv aus Stahl, insbesondere aus einem Chrom-Molybdän-Stahl, ausgeführt ist, kann das wärmeleitende Material beispielsweise als Kupfer oder Aluminium gewählt werden.

Im Folgenden wird die Erfindung anhand der in den Figuren dargestellten Ausführungsbeispielen und Ausführungsformen, die nicht zur Erfindung gehören ("Formen" im Folgenden), näher beschrieben und erläutert. Es zeigen:
- FIG 1: eine erste besagte Form,
- FIG 2: ein erstes Ausführungsbeispiel,
- FIG 3: eine zweite besagte Form,
- FIG 4: ein, wenn mit der Lehre des ersten Ausführungsbeispiels kombiniert, zweites Ausführungsbeispiel, und,
- FIG 5: ein, wenn mit der Lehre des ersten Ausführungsbeispiels kombiniert, drittes Ausführungsbeispiel.

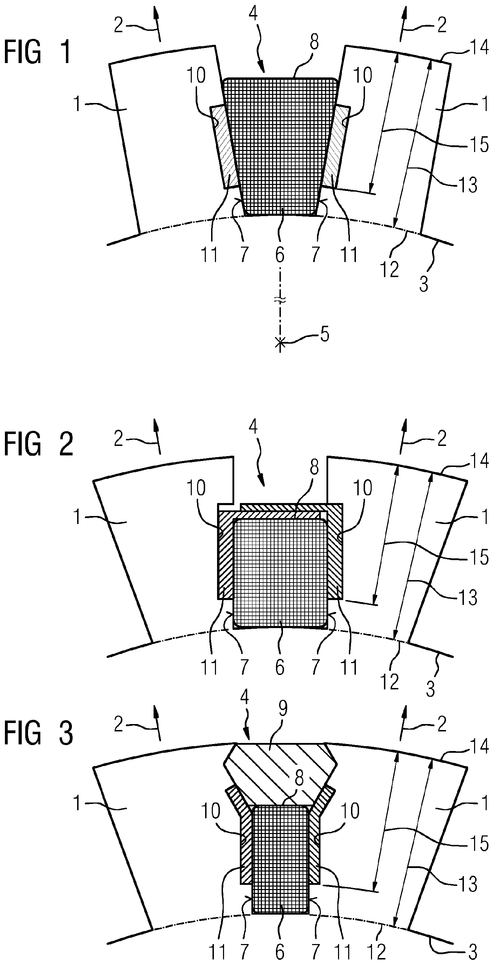

Figur 1 zeigt eine erste besagte Form, wobei ein Ausschnitt eines Querschnittes senkrecht zu einer Rotationsachse 5 des Aktivteils dargestellt ist.

Das Aktivteil weist eine Manteloberfläche 3 auf, aus welcher zwei Zähne 1 in radialer Richtung 2 nach außen herausragen. Die beiden Zähne 1 weisen jeweils ein magnetisch permeables Material auf, wobei zwischen den beiden Zähnen 1 eine Wicklungsnut 4 angeordnet ist, welche entlang der Rotationsachse 5 des Aktivteils angeordnet ist. In der Wicklungsnut 4 ist eine elektrische Wicklung 6 angeordnet.

Zur Verbesserung der Kühlung des Aktivteils weist der jeweilige Zahn 1 eine erste offene Aussparung 10 auf, welche an einer jeweiligen Zahnflanke 7 angeordnet ist. Die jeweilige Zahnflanke 7 ist dabei der Wicklungsnut 4 zugewandt, wobei die jeweilige erste offene Aussparung 10 in einer Ebene angeordnet ist, welche durch eine im Wesentlichen radiale Richtung 2 und eine Richtung im Wesentlichen entlang der Rotationsachse 5 aufgespannt wird. In der jeweiligen ersten offenen Aussparung 10 ist ein Wärmeleitelement 11 angeordnet, welches ein wärmeleitendes Material aufweist, dessen Wärmeleitfähigkeit größer als jene des magnetisch permeablen Materials ist. Das jeweilige erste Wärmeleitelement 11 kann beispielsweise mittels eines Klebers oder mithilfe einer formschlüssigen Verbindung mit dem jeweiligen Zahn 1 verbunden werden.

Der jeweilige Zahn 1 erstreckt sich in radialer Richtung 2 ausgehend von der Manteloberfläche 3 entlang einer Zahnhöhe 13 von einer Zahnwurzel 12 bis zu einer Zahnspitze 14. Die jeweilige erste offene Aussparung 10 und/oder das jeweilige Wärmeleitelement 11 erstreckt sich in radialer Richtung 2 vorzugsweise zur jeweiligen Zahnwurzel 12 hin bis zu einer Tiefe 15, welche höchstens 9/10, insbesondere 4/5, der Zahnhöhe 13 entspricht. Die Tiefe 15 bemisst sich dabei in radialer Richtung 2 ausgehend von der Zahnspitze 14. Weiterhin erstreckt sich die jeweilige erste offene Aussparung 10 und/oder das jeweilige Wärmeleitelement 11 in radialer Richtung zur jeweiligen Zahnspitze 14 hin vorzugsweise zumindest bis zu jener Oberfläche 8 der elektrischen Wicklung 6, welche einer radialen Öffnung der jeweiligen Wicklungsnut 4 zugewandt ist.

Insbesondere weist das Aktivteil mehr als zwei Zähne 1 auf, so dass mehrere Wicklungsnuten 4 vorhanden sind. Dabei ist die jeweilige, einer Wicklungsnut 4 zugewandte Zahnflanke 7 vorzugsweise wie oben erläutert ausgeführt, so dass jeweils eine erste offene Aussparung 10 und ein darin angeordnetes Wärmeleitelement 11 vorgesehen sind. Der jeweilige Zahn 1 ist somit vorzugsweise in Umfangsrichtung symmetrisch ausgeführt.

Figur 2 zeigt ein erstes Ausführungsbeispiel des erfindungsgemäßen Aktivteils. Gleiche Bezugszeichen wie in Figur 1 bezeichnen dabei gleiche Gegenstände. Da das Aktivteil des ersten Ausführungsbeispiels einige Ähnlichkeiten mit besagter erster Form aufweist, werden lediglich einige Unterschiede erläutert.

Der jeweilige Zahn 1 des Aktivteils gemäß dem ersten Ausführungsbeispiel weist entlang der elektrischen Wicklung 6 und darüber hinaus eine von radial innen nach radial außen zunehmende Ausdehnung in Umfangsrichtung auf. Beispielsweise kann der jeweilige Zahn 1 derart ausgeführt sein, dass die Wicklungsnut 4 parallele Flanken aufweist. Die jeweilige erste offene Aussparung 10 erstreckt sich in radialer Richtung zur jeweiligen Zahnspitze 14 hin über die elektrische Wicklung 6 hinaus. Dies erlaubt, das in der jeweiligen ersten offenen Aussparung 10 angeordnete jeweilige Wärmeleitelement 11 zusätzlich zu jener Oberfläche 8 der elektrischen Wicklung 6 weiterzuführen, welche der radialen Öffnung der Wicklungsnut 4 zugewandt ist. Das jeweilige Wärmeleitelement 11 ist somit abschnittsweise in radialer Richtung 2 an die Oberfläche 8 anschließend angeordnet.

Figur 3 zeigt eine zweite besagte Form. Da das Aktivteil der zweiten besagten Form einige Ähnlichkeiten mit jenem der ersten besagten Form aufweist, werden lediglich einige Unterschiede erläutert.

Der jeweilige Zahn 1 des Aktivteils gemäß der zweiten besagten Form weist entlang der elektrischen Wicklung 6 und darüber hinaus eine von radial innen nach radial außen zunehmende Ausdehnung in Umfangsrichtung auf. Beispielsweise kann der jeweilige Zahn 1 derart ausgeführt sein, dass die Wicklungsnut 4 parallele Flanken aufweist. Die Wicklungsnut 4 wird in radialer Richtung mittels eines Nutverschlusskeils 9 verschlossen, welcher in Bezug auf die elektrische Wicklung 6 radial weiter außen angeordnet ist. Die beiden Zähne 1 und der Nutverschlusskeil 9 sind dabei derart ausgestaltet, dass zumindest in radialer Richtung 2 ein Formschluss vorliegt, welcher den Nutverschlusskeil 9 und somit auch die elektrische Wicklung 6 nach radial außen fixiert. Zusätzlich kann mittels des Nutverschlusskeils 9 auch das jeweilige Wärmeleitelement 11 fixiert werden.

Die jeweilige erste offene Aussparung 10 erstreckt sich in radialer Richtung zur jeweiligen Zahnspitze 14 hin über die elektrische Wicklung 6 hinaus entlang eines Teils der den Nutverschlusskeil 9 zugewandten Seite des jeweiligen Zahnes 1. Auch das jeweilige, in der jeweiligen ersten offenen Aussparung 10 angeordnete Wärmeleitelement 11 erstreckt sich zur jeweiligen Zahnspitze 14 hin über die elektrische Wicklung 6 hinaus entlang eines Teils der den Nutverschlusskeil 9 zugewandten Seite des jeweiligen Zahnes 1.

Zusätzlich kann das jeweilige Wärmeleitelement 11 derart ausgeführt sein, dass das jeweilige Wärmeleitelement 11 wie im ersten Ausführungsbeispiel zusätzlich zu jener Oberfläche 8 der elektrischen Wicklung 6 weitergeführt wird, welche der radialen Öffnung der Wicklungsnut 4 zugewandt ist. Das jeweilige Wärmeleitelement 11 kann somit abschnittsweise in radialer Richtung 2 an die Oberfläche 8 anschließend angeordnet sein. Somit kann ein Abschnitt des jeweiligen Wärmeleitelementes 11 zwischen der elektrischen Wicklung 6 und dem Nutverschlusskeil 9 angeordnet sein.

Denkbar ist auch, dass kein Nutverschlusskeil 9 vorgesehen ist und sich die jeweilige erste offene Aussparung 10 und/oder das jeweilige Wärmeleitelement 11 in radialer Richtung zur jeweiligen Zahnspitze 14 hin dennoch über die elektrische Wicklung 6 hinaus erstrecken.

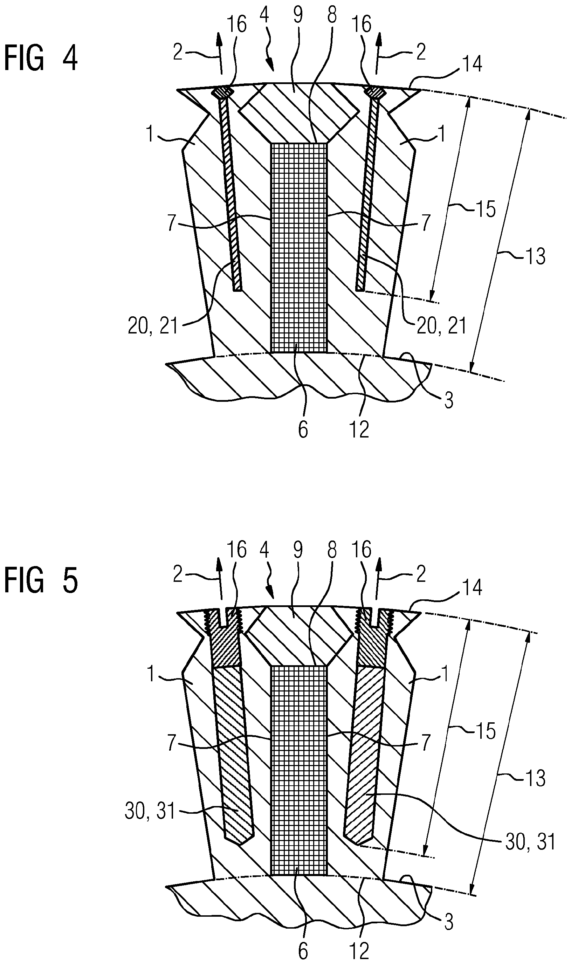

Figur 4 zeigt ein, wenn mit der Lehre des ersten Ausführungsbeispiels kombiniert, zweites Ausführungsbeispiel des erfindungsgemäßen Aktivteils.

Das Aktivteil weist eine Manteloberfläche 3 auf, aus welcher zwei Zähne 1 in radialer Richtung 2 nach außen herausragen. Die beiden Zähne 1 weisen jeweils ein magnetisch permeables Material auf, wobei zwischen den beiden Zähnen 1 eine Wicklungsnut 4 angeordnet ist, welche entlang einer Rotationsachse 5 des Aktivteils angeordnet ist. In der Wicklungsnut 4 ist eine elektrische Wicklung 6 angeordnet.

Zur Verbesserung der Kühlung des Aktivteils weist der jeweilige Zahn 1 eine zweite offene Aussparung 20 auf, welche als Nut von radial außen in den jeweiligen Zahn 1 eingebracht ist. Die jeweilige zweite offene Aussparung 20 ist somit in einer Ebene angeordnet, welche durch eine im Wesentlichen radiale Richtung 2 und eine Richtung im Wesentlichen entlang der Rotationsachse 5 aufgespannt wird. In der jeweiligen zweiten offenen Aussparung 20 ist ein Wärmeleitelement 21 angeordnet, welches ein wärmeleitendes Material aufweist, dessen Wärmeleitfähigkeit größer als jene des magnetisch permeablen Materials ist. Das jeweilige zweite Wärmeleitelement 21 kann beispielsweise mittels eines Klebers oder mithilfe einer formschlüssigen Verbindung mit dem jeweiligen Zahn 1 verbunden werden.

Die jeweilige zweite offene Aussparung 20 und/oder das jeweilige Wärmeleitelement 21 erstreckt sich in radialer Richtung 2 vorzugsweise zur jeweiligen Zahnwurzel 12 hin bis zu einer Tiefe 15, welche höchstens 9/10, insbesondere 4/5, der Zahnhöhe 13 entspricht. Die Tiefe 15 bemisst sich dabei in radialer Richtung 2 ausgehend von der Zahnspitze 14.

Weiterhin erstreckt sich das jeweilige Wärmeleitelement 21 in radialer Richtung 2 zur jeweiligen Zahnspitze 14 hin vorzugsweise zumindest bis zu jener Oberfläche 8 der elektrischen Wicklung 6, welche einer radialen Öffnung der jeweiligen Wicklungsnut 4 zugewandt ist.

Die Wicklungsnut 4 wird in radialer Richtung 2 mittels eines Nutverschlusskeils 9 verschlossen, welcher in Bezug auf die elektrische Wicklung 6 radial weiter außen angeordnet ist. Die beiden Zähne 1 und der Nutverschlusskeil 9 sind dabei derart ausgestaltet, dass zumindest in radialer Richtung 2 ein Formschluss vorliegt, welcher den Nutverschlusskeil 9 und somit auch die elektrische Wicklung 6 nach radial außen fixiert. In ähnlicher Weise ist für die jeweilige zweite offene Aussparung 20 und das jeweilige darin befindliche Wärmeleitelement 21 ein Verschlussstopfen 16 vorgesehen, welcher insbesondere dazu dient, das jeweilige Wärmeleitelement 21 mittels eines Formschlusses in radialer Richtung 2 zu fixieren.

Insbesondere weist das Aktivteil mehr als zwei Zähne 1 auf, so dass mehrere Wicklungsnuten 4 vorhanden sind. Dabei ist die jeweilige, einer Wicklungsnut 4 zugewandte Zahnflanke 7 vorzugsweise wie oben erläutert ausgeführt, so dass jeweils eine erste offene Aussparung 10 und ein darin angeordnetes Wärmeleitelement 11 vorgesehen sind. Der jeweilige Zahn 1 ist somit vorzugsweise in Umfangsrichtung symmetrisch ausgeführt.

Figur 5 zeigt ein, wenn mit der Lehre des ersten Ausführungsbeispiels kombiniert, drittes Ausführungsbeispiel des erfindungsgemäßen Aktivteils. Da das Aktivteil einige Ähnlichkeiten mit Figur 4 aufweist, werden lediglich einige Unterschiede erläutert.

Die jeweilige zweite offene Aussparung 30 ist als Bohrung ausgeführt, welche jeweils in radialer Richtung in den jeweiligen Zahn 1 eingebracht ist. In der jeweiligen zweiten offenen Aussparung 30 sind ein jeweiliges Wärmeleitelement 30 und ein Verschlussstopfen 16 angeordnet, welches bzw. welcher zur jeweiligen Bohrung passend ausgeführt ist.

Zusammenfassend betrifft die Erfindung ein Aktivteil nach Anspruch 1. Weiterhin betrifft die Erfindung eine elektrische Maschine mit einem derartigen Aktivteil. Um die Kühlung eines Aktivteils auf kostengünstige Art und Weise zu verbessern, wird vorgeschlagen, dass das Aktivteil die Merkmale des Anspruchs 1 aufweist.

## Patentansprüche

1. Aktivteil einer elektrischen Maschine, wobei das Aktivteil umfasst:
- zumindest zwei Zähne (1), welche jeweils ein magnetisch permeables Material aufweisen und welche jeweils in radialer Richtung (2) aus einer Manteloberfläche (3) des Aktivteils herausragen, und
- zumindest eine Wicklungsnut (4), welche jeweils zwischen einem Paar der zumindest zwei Zähne (1) angeordnet ist,
wobei die zumindest eine Wicklungsnut (4) im Wesentlichen entlang einer Rotationsachse (5) des Aktivteils angeordnet ist und
wobei eine elektrische Wicklung (6) in der jeweiligen Wicklungsnut (4) ist,
wobei
- zumindest eine erste offene Aussparung (10), welche jeweils an einem jeweiligen Zahn (1) in einer jeweiligen Ebene angeordnet ist, vorgesehen ist,
- wobei die jeweilige Ebene durch eine im Wesentlichen radiale Richtung (2) und eine Richtung im Wesentlichen entlang der Rotationsachse (5) aufgespannt wird,
- wobei zumindest ein Wärmeleitelement (11), vorgesehen ist, welches ein wärmeleitendes Material aufweist, dessen Wärmeleitfähigkeit größer als jene des magnetisch permeablen Materials ist,
**dadurch gekennzeichnet, dass**
das zumindest eine Wärmeleitelement (11) teilweise in der jeweiligen ersten offenen Aussparung (10) angeordnet ist,
wobei die in der jeweiligen Wicklungsnut (4) befindliche elektrische Wicklung (6) eine Oberfläche (8) aufweist, welche einer radialen Öffnung der jeweiligen Wicklungsnut (4) zugewandt ist, wobei das zumindest eine Wärmeleitelement (11) derart ausgestaltet ist, dass das zumindest eine Wärmeleitelement (11) sich zumindest abschnittsweise in radialer Richtung (2) an die jeweilige, der radialen Öffnung zugewandte Oberfläche (8) der jeweiligen elektrischen Wicklung (6) anschließend angeordnet ist.

2. Aktivteil nach Anspruch 1,
wobei die jeweilige Wicklungsnut (4) in radialer Richtung (2) durch einen jeweiligen Nutverschlusskeil (9) verschließbar ist, mittels welchem die in der jeweiligen Wicklungsnut (4) befindliche elektrische Wicklung (6) radial fixierbar ist, wobei die jeweilige erste offene Aussparung (10) und das jeweilige Wärmeleitelement (11) an einer dem jeweiligen anordenbaren Nutverschlusskeil (9) zugewandten Seite des jeweiligen Zahnes (1) angeordnet ist.

3. Aktivteil nach Anspruch 1 oder 2,
wobei eine jeweilige zweite offene Aussparung (20,30) als eine Nut (20) oder eine Bohrung (30) ausgeführt ist, welche in radialer Richtung in den jeweiligen Zahn (1) eingebracht ist, wobei in der Nut (20) oder der Bohrung (30) ein Wärmeleitelement (21,31) angeordnet ist, welches ein wärmeleitendes Material aufweist, dessen Wärmeleitfähigkeit größer als jene des magnetisch permeablen Materials ist.

4. Aktivteil nach Anspruch 3,
wobei das Aktivteil zumindest einen Verschlussstopfen (16) aufweist, mittels welchem die jeweilige zweite offene Aussparung (20,30) verschließbar ist.

5. Aktivteil nach einem der vorhergehenden Ansprüche,
wobei das Aktivteil als massiver Läufer der elektrischen Maschine ausgeführt ist.

6. Aktivteil nach einem der vorhergehenden Ansprüche,
wobei die zumindest zwei Zähne (1) jeweils nach radial außen aus der Manteloberfläche (3) herausragen,
wobei der jeweilige Zahn (1) zumindest entlang der elektrischen Wicklung (6) eine von radial innen nach radial außen zunehmende Ausdehnung in Umfangsrichtung aufweist.

7. Aktivteil nach einem der vorhergehenden Ansprüche,
wobei die zumindest zwei Zähne (1) jeweils ausgehend von einer jeweiligen Zahnwurzel (12) auf einer Länge einer Zahnhöhe (13) bis zu einer jeweiligen Zahnspitze (14) radial aus der Manteloberfläche (3) herausragen,
wobei sich die jeweilige offene Aussparung (10,20,30) und das jeweilige Wärmeleitelement (11,21,31) in radialer Richtung (2) zur jeweiligen Zahnwurzel (12) hin jeweils bis zu einer Tiefe (15) in den jeweiligen Zahn (1) erstreckt, welche höchstens 9/10, insbesondere höchstens 4/5, der Zahnhöhe (13) entspricht.

8. Aktivteil nach einem der vorhergehenden Ansprüche,
wobei die zumindest zwei Zähne (1) jeweils ausgehend von einer jeweiligen Zahnwurzel (12) auf einer Länge einer Zahnhöhe (13) bis zu einer jeweiligen Zahnspitze (14) radial aus der Manteloberfläche (3) herausragen,
wobei sich die jeweilige offene Aussparung (10,20,30) und das jeweilige Wärmeleitelement (11,21,31) in radialer Richtung (2) zur jeweiligen Zahnspitze (14) hin jeweils zumindest bis zu jener Oberfläche (8) der in der jeweiligen Wicklungsnut (4) befindlichen elektrischen Wicklung (6) erstreckt, welche einer radialen Öffnung der jeweiligen Wicklungsnut (4) zugewandt ist.

9. Aktivteil nach einem der vorhergehenden Ansprüche,
wobei das wärmeleitende Material Kupfer oder Aluminium umfasst.

10. Aktivteil nach einem der vorhergehenden Ansprüche,
wobei das jeweilige Wärmeleitelement (11,21,31) formschlüssig oder stoffschlüssig mit dem jeweiligen Zahn (1) verbunden ist.

11. Aktivteil nach einem der vorhergehenden Ansprüche,
wobei das jeweilige Wärmeleitelement (11,21,31) mittels eines Klebers mit dem jeweiligen Zahn (1) verbunden ist.

12. Aktivteil nach einem der vorhergehenden Ansprüche,
wobei die Wärmeleitfähigkeit des wärmeleitenden Materials zumindest fünfmal so groß, vorzugsweise zumindest achtmal so groß, wie die Wärmeleitfähigkeit des magnetisch permeablen Materials ist.

13. Elektrische Maschine umfassend zumindest ein Aktivteil nach einem der vorhergehenden Ansprüche.

## Claims

1. Active part of an electric machine, wherein the active part comprises:
- at least two teeth (1) which each have a magnetically permeable material and which each protrude from a lateral surface (3) of the active part in the radial direction (2), and
- at least one winding groove (4) which in each case is arranged between a pair of the at least two teeth (1), wherein the at least one winding groove (4) is arranged substantially along an axis of rotation (5) of the active part and
wherein an electrical winding (6) is in the respective winding groove (4),
wherein
- at least one first open recess (10) is provided, which in each case is arranged on or in one respective tooth (1) in one respective plane,
- wherein the respective plane is spanned by a substantially radial direction (2) and a direction substantially along the axis of rotation (5),
- wherein at least one thermally conductive element (11) is provided, which has a thermally conductive material, the thermal conductivity thereof being greater than that of the magnetically permeable material,
**characterised in that**
the at least one thermally conductive element (11) is arranged partially in the respective first open recess (10), wherein the electrical winding (6) located in the respective winding groove (4) has a surface (8) which faces a radial opening of the respective winding groove (4), wherein the at least one thermally conductive element (11) is designed such that the at least one thermally conductive element (11) is arranged at least partially in the radial direction (2) adjacent to the respective surface (8) of the respective electrical winding (6) facing the radial opening.

2. Active part according to claim 1,
wherein the respective winding groove (4) is able to be closed in the radial direction (2) by one respective slot wedge (9), the electrical winding (6) located in the respective winding groove (4) being able to be radially fixed thereby,
wherein the respective first open recess (10) and the respective thermally conductive element (11) is arranged on a side of the respective tooth (1) facing the respective slot wedge (9).

3. Active part according to claim 1 or 2,
wherein one respective second open recess (20, 30) is designed as a groove (20) or a bore (30) which is incorporated into the respective tooth (1) in the radial direction,
wherein a thermally conductive element (21, 31), which has a thermally conductive material, the thermal conductivity thereof being greater than that of the magnetically permeable material, is arranged in the groove (20) or the bore (30).

4. Active part according to claim 3,
wherein the active part has at least one closure stopper (16), the respective second open recess (20, 30) being able to be closed thereby.

5. Active part according to one of the preceding claims, wherein the active part is designed as a solid rotor of the electric machine.

6. Active part according to one of the preceding claims,
wherein the at least two teeth (1) in each case protrude radially outwardly from the lateral surface (3),
wherein at least along the electrical winding (6) the respective tooth (1) has a dimension in the peripheral direction increasing from radially inwardly to radially outwardly.

7. Active part according to one of the preceding claims, wherein the at least two teeth (1) in each case protrude from one respective tooth root (12) over a length of a tooth height (13) to one respective tooth tip (14) radially from the lateral surface (3),
wherein the respective open recess (10, 20, 30) and the respective thermally conductive element (11, 21, 31) extends in the radial direction (2) toward the respective tooth root (12), in each case to a depth (15) in the respective tooth (1) which corresponds at most to 9/10, in particular at most to 4/5 of the tooth height (13).

8. Active part according to one of the preceding claims, wherein the at least two teeth (1) in each case protrude from one respective tooth root (12) over a length of a tooth height (13) to one respective tooth tip (14) radially from the lateral surface (3),
wherein the respective open recess (10, 20, 30) and the respective thermally conductive element (11, 21, 31) extend in the radial direction (2) toward the respective tooth tip (14), in each case at least as far as the surface (8) of the electrical winding (6) which is located in the respective winding groove (4) and which faces a radial opening of the respective winding groove (4).

9. Active part according to one of the preceding claims,
wherein the thermally conductive material comprises copper or aluminium.

10. Active part according to one of the preceding claims, wherein the respective thermally conductive element (11, 21, 31) is connected by a positive or material connection to the respective tooth (1).

11. Active part according to one of the preceding claims, wherein the respective thermally conductive element (11, 21, 31) is connected to the respective tooth (1) by means of an adhesive.

12. Active part according to one of the preceding claims, wherein the thermal conductivity of the thermally conductive material is at least five times as great, preferably at least eight times as great, as the thermal conductivity of the magnetically permeable material.

13. Electric machine comprising at least one active part according to one of the preceding claims.

## Revendications

1. Partie active d'une machine électrique, la partie active comprenant :
- au moins deux dents (1), qui ont chacune un matériau perméable magnétiquement et qui font chacune saillie dans une direction (2) radiale d'une surface (3) latérale de la partie active, et
- au moins une encoche (4) d'enroulement, qui est disposée respectivement entre une paire des au moins deux dents (1), dans laquelle la au moins une encoche (4) d'enroulement est disposée sensiblement suivant un axe (5) de révolution de la partie active et
dans laquelle un enroulement (6) électrique est dans l'encoche (4) d'enroulement respective,
dans laquelle
- il est prévu au moins un premier évidement (10) ouvert, qui est disposé respectivement dans un plan respectif sur une dent (1) respective,
- dans laquelle le plan respectif est engendré par une direction (2) sensiblement radiale et par une direction sensiblement suivant l'axe (5) de révolution,
- dans laquelle il est prévu au moins un élément (11) conducteur de la chaleur, qui a un matériau conducteur de la chaleur, dont la conductibilité est plus grande que celle du matériau perméable magnétiquement,
**caractérisée en ce que**
le au moins un élément (11) conducteur de la chaleur est disposé en partie dans le premier évidement (10) respectif ouvert, dans laquelle l'enroulement (6) électrique se trouvant dans l'encoche (4) respective d'enroulement a une surface (8), qui est tournée vers une ouverture radiale de l'encoche (4) respective d'enroulement, dans laquelle le au moins un élément (11) conducteur de la chaleur est conformé de manière à ce que le au moins un élément (11) conducteur de la chaleur soit disposé au moins par endroits dans la direction (2) radiale en raccordement à la surface (8) respective, tournée vers l'ouverture radiale, de l'enroulement (6) électrique respectif.

2. Partie active suivant la revendication 1,
dans laquelle l'encoche (4) respective d'enroulement peut être fermée dans une direction (2) radiale par un coin (9) respectif de fermeture d'encoche, au moyen duquel l'enroulement (6) électrique se trouvant dans l'encoche (4) respective d'enroulement peut être immobilisé radialement,
dans laquelle le premier évidement (10) respectif ouvert et l'élément (11) respectif conducteur de la chaleur sont disposés d'un côté, tourné vers le coin (9) respectif de fermeture d'encoche pouvant être mis, de la dent (1) respective.

3. Partie active suivant la revendication 1 ou 2,
dans laquelle un deuxième évidement (20, 30) respectif ouvert est réalisé sous la forme d'une encoche (20) ou d'un trou (30), qui est ménagé dans une direction radiale dans la dent (1) respective, dans laquelle, dans l'encoche (20) ou dans le trou (30) est disposé un élément (21, 31) conducteur de la chaleur, qui a un matériau conducteur de la chaleur, dont la conductibilité est plus grande que celle du matériau perméable magnétiquement.

4. Partie active suivant la revendication 3,
dans laquelle la partie active a au moins un bouchon (16) de fermeture, au moyen duquel le deuxième évidement (20, 30) respectif ouvert peut être fermé.

5. Partie active suivant l'une des revendications précédentes, dans laquelle la partie active est réalisée en rotor plein de la machine électrique.

6. Partie active suivant l'une des revendications précédentes, dans laquelle les au moins deux dents (1) font saillie chacune vers l'extérieur radialement de la surface (3) latérale,
dans laquelle la dent (1) respective a, au moins le long de l'enroulement (6) électrique, une étendue dans la direction périphérique, qui croît de l'intérieur radialement à l'extérieur radialement.

7. Partie active suivant l'une des revendications précédentes, dans laquelle les au moins deux dents (1) font saillie radialement de la surface (3) latérale respectivement à partir d'une racine (12) respective de dent sur une longueur d'une hauteur (13) de dent jusqu'à une pointe (14) respective de dent,
dans laquelle l'évidement (10, 20, 30) respectif ouvert et l'élément (11, 21, 31) respectif conducteur de la chaleur s'étendent dans une direction (2) radiale vers la racine (12) respective de dent respectivement jusqu'à une profondeur (15) dans la dent (1) respective, qui correspond au plus au 9/10^{ème}, notamment au plus au 4/5^{ème}, de la hauteur (13) de la dent.

8. Partie active suivant l'une des revendications précédentes, dans laquelle les au moins deux dents (1) font saillie radialement de la surface (3) latérale respectivement à partir d'une racine (12) respective de dent sur une longueur d'une hauteur (13) de dent jusqu'à une pointe (14) respective de dent,
dans laquelle l'évidement (10, 20, 30) respectif ouvert et l'élément (11, 21, 31) respectif conducteur de la chaleur s'étendent dans une direction (2) radiale vers la pointe (14) respective de dent chacun au moins jusqu'à la surface (8) de l'enroulement (6) électrique, se trouvant dans l'encoche (4) respective d'enroulement, qui est tournée vers une ouverture radiale de l'encoche (4) respective d'enroulement.

9. Partie active suivant l'une des revendications précédentes, dans laquelle le matériau conducteur de la chaleur comprend du cuivre ou de l'aluminium.

10. Partie active suivant l'une des revendications précédentes, dans laquelle l'élément (11, 21, 31) respectif conducteur de la chaleur est relié à complémentarité de forme ou à coopération de matière à la dent (1) respective.

11. Partie active suivant l'une des revendications précédentes, dans laquelle l'élément (11, 21, 31) respectif conducteur de la chaleur est relié à la dent (1) respective au moyen d'une colle.

12. Partie active suivant l'une des revendications précédentes, dans laquelle la conductibilité du matériau conducteur de la chaleur représente au moins cinq fois, de préférence au moins huit fois, la conductibilité du matériau perméable magnétiquement.

13. Machine électrique comprenant au moins une partie active suivant l'une des revendications précédentes.
